# EUROPEAN PATENT APPLICATION

(11) **EP 4 360 782 A1**
(43) Date of publication of application: **01.05.2024**
(21) Application number: 23203748.1
(22) Date of filing: 16.10.2023
(51) Int. Cl.: B23B 13/02, B23Q 15/22, B23B 7/06, B23B 13/12, G05B 19/19

(54) **MACHINE TOOL SYSTEM AND METHOD OF CONTROLLING MACHINE TOOL SYSTEM**

(30) Priority: 27.10.2022 JP 2022171999
(71) Applicant: Star Micronics Co., Ltd., Shizuoka-shi, Shizuoka 422-8654 (JP)
(72) Inventor: Atsuhara, Shota, SHIZUOKA-SHI, SHIZUOKA (JP)
(74) Representative: Grünecker Patent- und Rechtsanwälte PartG mbB

(57) **Abstract**

A lathe system 1 capable of manufacturing a long product from a bar W by performing a grip change by a spindle 25 during a machining cycle, the long product being of a length exceeding a movable range of the spindle 25, the spindle 25 releasably gripping the bar W and moving in a Z 1-axis direction of the bar W. The lathe system 1 includes a pusher 44 capable of moving in the Z1-axis direction together with the bar W. The lathe system 1 further includes a bar length shortage prior determination unit 20b that determines whether the pusher 44 is in a position permitting the grip change to be performed during the machining cycle. The determination is made prior to the start of the machining cycle.

## Description

### CROSS-REFERENCE TO RELATED APPLICATIONS

This application claims priority of Japanese Patent Application No. 2022-171999 filed on October 27, 2022. The contents of this application are incorporated herein by reference in their entirety.

### BACKGROUND OF THE INVENTION

The present invention relates to a machine tool system and a method of controlling a machine tool system that can manufacture a long product from a bar by performing a grip change by a spindle during a machining cycle, the long product being of a length exceeding a movable range of the spindle, the spindle releasably gripping the bar and moving in an axial direction of the bar.

Conventionally, there is a machine tool system that includes a machining apparatus having a spindle and a tool post, and a bar feeder that supplies a long bar to the machining apparatus. See Japanese Unexamined Patent Application Publication No. 2005-313267. The spindle of the machining apparatus rotates while releasably gripping the bar. The spindle is movable in the axial direction of the bar regardless of whether the spindle grips or releases the bar. A first control apparatus is built into the machining apparatus. The first control apparatus controls the operation of the spindle or the tool post to which the machining tool is attached according to a machining program (NC program) created by, for example, an operator of the machine tool system or an input operation by using an operation panel provided in the machining apparatus. The first control apparatus controls the operation of the tool post and the spindle according to the machining program, and accordingly, the front end portion of the bar is machined into a desired shape and the machined portion having been machined is cut off.

The bar feeder is provided alongside the machining apparatus so as to be closer to the rear end of the bar than the machining apparatus is. The bar feeder includes a pusher, a pusher driving mechanism that moves the pusher in the axial direction of the bar, and a second control apparatus that controls the operation of the pusher driving mechanism. The pusher has a finger chuck at the front end thereof. The finger chuck grips the rear end portion of the bar, and accordingly, the pusher is coupled to the bar. Then, the pusher driving mechanism feeds the pusher toward the front end of the bar, and accordingly, the bar input to the bar feeder is supplied to the machining apparatus. While the machining apparatus performs machining, the pusher biases the bar from the rear end of the bar toward the front end of the bar with a predetermined load. This load is set to a relatively small load that does not cause a slip between the bar and the spindle when the spindle grips the bar. In addition, the bar feeder pulls out a remaining bar, which is the bar shortened by machining, from the machining apparatus and discharges the remaining bar.

To manufacture a long product that exceeds the movable distance of the spindle, a grip change by the spindle may be performed during a single machining cycle for the long product. The grip change by the spindle may be a series of operations including releasing the bar, moving back toward the rear end of the bar, and re-gripping the bar. In addition, a grip change is also performed at the beginning of the single machining cycle. The single machining cycle includes a series of operations starting with a first grip change and ending with cutting off a machined portion of the bar. The first grip change includes a grip change performed immediately after a front end of the bar is cut off after power-on or after set-up. The first grip change further includes a grip change performed immediately after the machined portion of the bar is cut off in a previous machining cycle. One product is manufactured each time the machining apparatus performs the single machining cycle.

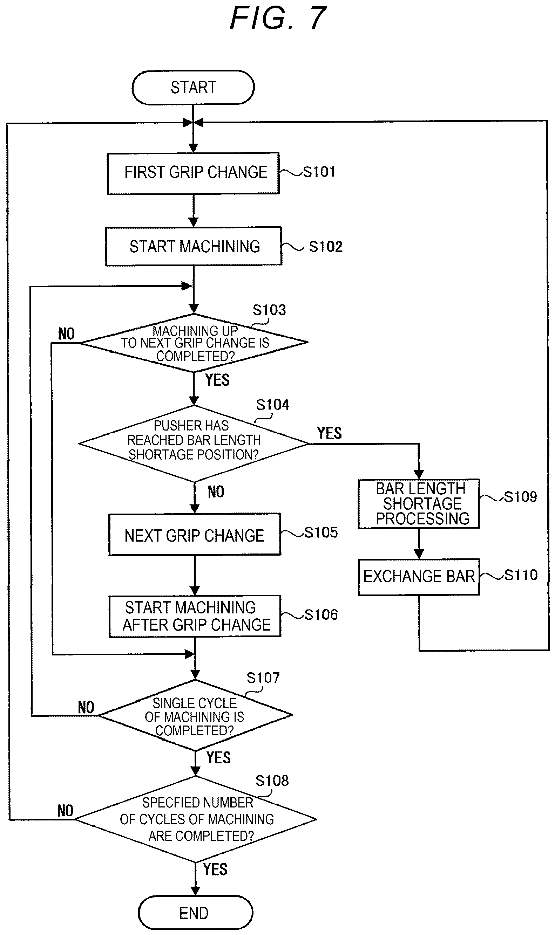

FIG. 7 is a flowchart illustrating an operation for manufacturing a long product by using a conventional machine tool system.

As illustrated in FIG. 7, the conventional machine tool system performs the first grip change (step S101). Then, the machine tool system starts machining after the grip change (step S102). When the machining to be performed before the next grip change is not completed (NO in step S103), the processing proceeds to step S107. When the machining to be performed before the next grip change is completed (YES in step S103), it is determined whether the pusher has reached a predetermined bar length shortage position (step S104). The bar length shortage position is set to a position at which the spindle and the pusher do not interfere with each other when the spindle moves back during a grip change. The spindle here includes a structural member that move back together with the spindle.

When the pusher has not reached the bar length shortage position (NO in step S104), the next grip change is performed (step S105). Then, the machining is started again after the next grip change (step S106), and the processing proceeds to step S107. When the single machining cycle is not fully completed (NO in step S107), the processing proceeds to step S103. When the single machining cycle is fully completed (YES in step S107), it is determined whether a specified number of machining cycles are completed (step S108), and the operation ends when the specified number of machining cycles are completed (YES in step S108). When the specified number of machining cycles are not completed (NO in step S108), the processing returns to step S101. Prior to step S101, it is determined whether the pusher has reached the bar length shortage position, and the bar is replaced when the pusher has reached the bar length shortage position, but the description is omitted here.

When the pusher has reached the bar length shortage position in step S104 (YES in step S104), bar length shortage processing is performed before the next grip change (step S109). Specifically, the machined portion of the bar having been machined is cut off and discharged. After that, a bar exchange that pulls out the remaining bar and supplies a new bar is performed (step S110). When the bar exchange is completed, the front end of the bar is cut off and the processing returns to step S101.

### SUMMARY

In the conventional machine tool system, a bar length shortage processing is performed when it is determined that the pusher has reached the bar length shortage position in a grip change during the single machining cycle for manufacturing a long product. The machined portion of the bar is cut off and discharged. The remaining bar is pulled out. The discharged machined portion is discarded as an unfinished product. The conventional machine tool system wastes material, energy, time, and labor.

The present invention addresses the problem described above with an object of providing a machine tool system and a method of controlling a machine tool system that reduce wasteful machining.

According to the present invention, there is provided a machine tool system capable of manufacturing a long product from a bar by performing a grip change by a spindle during a machining cycle, the long product being of a length exceeding a movable range of the spindle, the spindle releasably gripping the bar and moving in an axial direction of the bar, the machine tool system comprising:
a pusher capable of moving in the axial direction together with the bar; and
a bar length shortage prior determination unit that determines whether the pusher is in a position permitting the grip change to be performed during the machining cycle, the determination being made prior to the start of the machining cycle.

The bar length shortage prior determination unit determines whether to permit a grip change to be performed during the machining cycle. The determination is made prior to the start of the machining cycle. The machine tool system of the invention can reduce wasteful machining.

Here, the bar length shortage prior determination unit may perform the determination according to whether the pusher reaches a position not permitting the grip change to be performed during the machining cycle. In other words, the bar length shortage prior determination unit may perform the determination according to whether the pusher reaches the bar length shortage position before the grip change to be performed during the machining cycle. In addition, the bar length shortage prior determination unit may perform the determination prior to the start of the first grip change in the single machining cycle. Furthermore, the bar length shortage prior determination unit may perform the determination after the end of the previous machining cycle and before the start of the first grip change of the next machining cycle. In addition, a machine controller may be provided to replace the bar with a new bar when determined that the pusher is not in a position permitting the grip change to be performed during machining cycle.

In the machine tool system, the determination is made according to a specified distance specified in a machining program.

This can set the specified distance to any given distance.

Here, the bar length shortage prior determination unit may determine whether the pusher is in a position permitting the grip change to be performed during the machining cycle by comparing the remaining effective length of the bar with the specified distance.

In the machine tool system, the determination is made according to a calculated distance obtained by calculating a moving distance of the spindle according to a machining program.

Accurate determination is ensured because the bar length shortage prior determination unit performs the determination according to the calculated distance. The moving distance of the spindle according to the machining program may be the total moving distance of the spindle in the series of operations excluding any operations after the last grip change when the grip change is performed a plurality of times during the machining cycle.

Here, the bar length shortage prior determination unit may determine whether the pusher is in a position permitting the grip change to be performed during the machining cycle by comparing the remaining effective length of the bar with the calculated distance.

According to the present invention, there is provided a method of controlling a machine tool system, the machine tool system being capable of manufacturing a long product from a bar by performing a grip change by a spindle during a machining cycle, the long product being of a length exceeding a movable range of the spindle, the spindle releasably gripping the bar and moving in an axial direction of the bar, the method comprising:
determining whether a pusher is in a position permitting the grip change to be performed during the machining cycle, the pusher being movable in the axial direction together with the bar, and the determination being made prior to the start of the machining cycle; and
start machining when it is determined that the pusher is in a position permitting the grip change to be performed during the machining cycle.

In this method of controlling a machine tool system, it can be determined prior to the start of the machining cycle whether to permit a grip change to be performed during the machining cycle. The method can reduce wasteful machining.

According to the present invention, a machine tool system and a method of controlling a machine tool system that reduce wasteful machining can be provided.

### BRIEF DESCRIPTION OF THE DRAWINGS

FIG. 1 is a front view of a lathe system of an embodiment.
FIG. 2 is a plan view schematically illustrating an internal structure of the lathe system illustrated in FIG. 1.
FIG. 3 is a block diagram illustrating a hardware structure of the lathe system illustrated in FIG. 1.
FIG. 4 is a functional block diagram illustrating a functional structure of the lathe system illustrated in FIG. 1.
FIG. 5 is a flowchart illustrating an operation of manufacturing a long product by using the lathe system illustrated in FIG. 1.
FIG. 6 is a plan view for describing the positional relationship of the operation illustrated in FIG. 5.
FIG. 7 is a flowchart illustrating an operation of manufacturing a long product by using a conventional machine tool system.

### DETAILED DESCRIPTION

An embodiment of the present invention will be described below with reference to the drawings. In the embodiment, the present invention will be described using an example in which the present invention is applied to a lathe system including an NC lathe and a bar feeder.

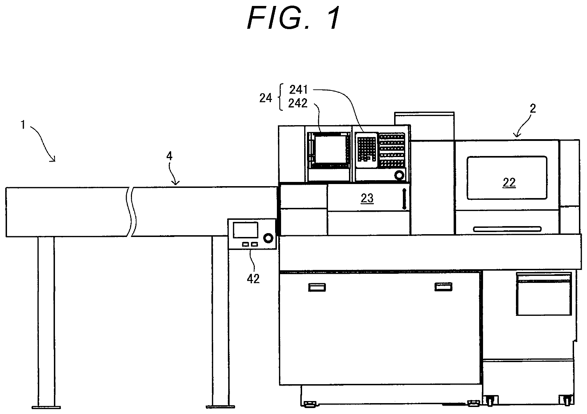

FIG. 1 is a front view of a lathe system of an embodiment.

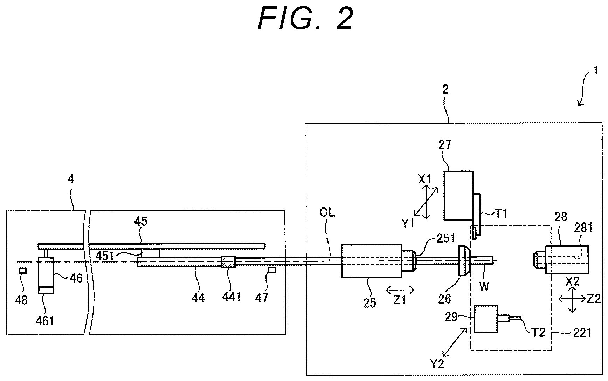

As illustrated in FIG. 1, a lathe system 1 of the embodiment includes an NC lathe 2, which is a machining apparatus, and a bar feeder 4, which is a material feeding device. This lathe system 1 corresponds to an example of a machine tool system. The NC lathe 2 of the embodiment is a so-called a Swiss-type lathe. The NC lathe 2 includes a machining chamber 22, a spindle chamber 23, and a lathe operation panel 24. The machining chamber 22 is a chamber having a space for machining the front end portion of a bar W (see FIG. 2) and is disposed on the right side of the NC lathe 2 as viewed from the front side. The spindle chamber 23 is a chamber in which a spindle 25 (see FIG. 2) is provided and is disposed on the left side of the NC lathe 2 as viewed from the front side.

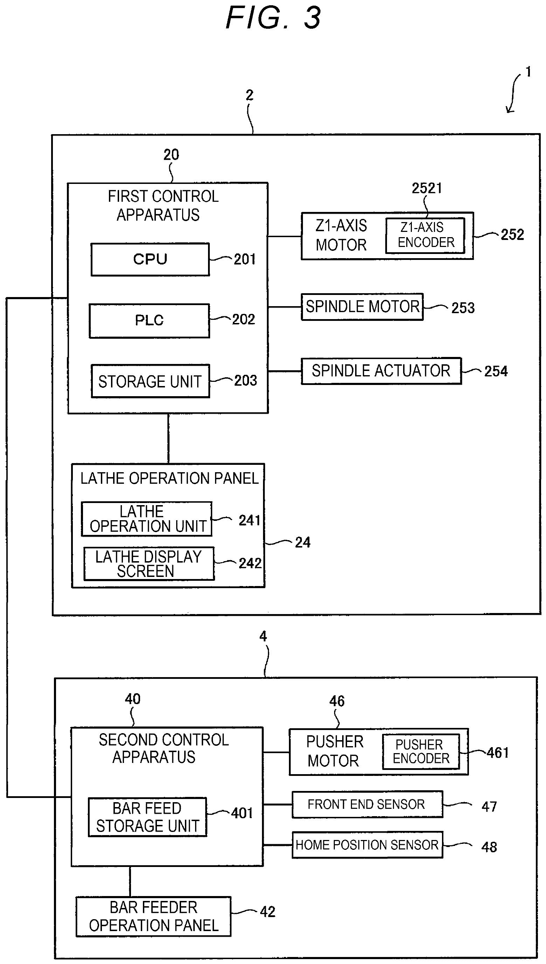

The lathe operation panel 24 includes a lathe operation unit 241 and a lathe display screen 242. The lathe operation unit 241 includes a plurality of buttons, a plurality of keys, and the like that receive input operations by an operator of the lathe system 1. The lathe operation unit 241 may be a touch panel integrated with the lathe display screen 242. The operator of the lathe system 1 can store a machining program created through the lathe operation unit 241 or an external computer in a storage unit 203 (see FIG. 3), which will be described later. In addition, the operator of the lathe system 1 can modify the machining program by using the lathe operation unit 241 and store the modified machining program in the storage unit 203. Furthermore, the operator of the lathe system 1 can operate the components of the lathe system 1 individually or in cooperation by using the lathe operation unit 241. The lathe display screen 242 is a display that indicates machining programs stored in the storage unit 203 and various types of information about the lathe system 1, such as various settings of the lathe system 1 and error details.

The bar feeder 4 supplies long bars W (see FIG. 2) to the NC lathe 2. The bar feeder 4 is provided alongside the NC lathe 2. The bar feeder 4 stores the plurality of bars W. The bar feeder 4 feeds one of the stored bars W toward the NC lathe 2. In addition, the bar feeder 4 pulls out a remaining bar, which is the bar W shortened by machining, from the NC lathe 2 and discharges the remaining bar. After discharging the remaining bar, the bar feeder 4 feeds a new one of the stored bars W toward the NC lathe 2. The bar feeder 4 has a bar feeder operation panel 42, which is an input device for operating the bar feeder 4.

FIG. 2 is a plan view schematically illustrating an internal structure of the lathe system illustrated in FIG. 1.

As illustrated in FIG. 2, the NC lathe 2 includes the spindle 25, a guide bush 26, a first tool post 27, a back spindle 28, and a second tool post 29. The spindle 25, the guide bush 26, the first tool post 27, the back spindle 28, and the second tool post 29 are disposed on a leg, which is the base. The spindle 25, the first tool post 27, the back spindle 28, and the second tool post 29 operate according to the machining program describing a machining operation and a grip change operation or through inputs from the lathe operation panel 24 (see FIG. 1).

The spindle 25 is movable in a Z1-axis direction. The spindle 25 is mounted on a not-shown headstock to be movable together with the headstock. The Z1-axis direction is the horizontal direction and is the left-right direction in FIG. 2. This Z1-axis direction corresponds to an example of the axial direction of the bar W. The spindle 25 has a collet chuck 251 in the front end portion thereof for releasably gripping the bar W passing through the spindle 25. The spindle 25 is rotatable about a spindle axis CL while gripping the bar W. The direction of the spindle axis CL coincides with the Z1-axis direction. The movement of the spindle 25 toward the front end of the bar W may be referred to below as moving forward, and the movement of the spindle 25 toward the rear end of the bar W may be referred to below as moving backward. In FIG. 2, the right direction is the forward direction and the left direction is the backward direction.

The guide bush 26 is fixed to the leg, which is the base. An end surface of the guide bush 26 opposite to the side on which the spindle 25 is disposed is exposed to the inside of the machining chamber 22 (see FIG. 1). The guide bush 26 supports the front end portion of the bar W having passed through the spindle 25 slidably in the Z1-axis direction. The portion of this guide bush 26 that supports the bar W is rotatable about the spindle axis CL in sync with the spindle 25. The front end portion of the bar W projecting from the guide bush 26 into the machining chamber 22 is machined by a first tool T1 attached to the first tool post 27. This first tool T1 corresponds to an example of a machining tool. Since the guide bush 26 suppresses the bending of the bar W during machining in this NC lathe 2, particularly a long bar W can be machined by the NC lathe 2 with high accuracy.

The first tool post 27 is movable in an X1-axis direction that is orthogonal to the Z1-axis direction and aligned with the horizontal direction, and a Y1-axis direction that is aligned with the vertical direction. This first tool post 27 corresponds to an example of a tool post. In FIG. 2, the vertical direction is the X1-axis direction, and the direction that is orthogonal to the sheet is the Y1-axis direction. A plurality of types of first tools T1 including a cutting tool, a cut-off tool, and the like arranged in the Y1-axis direction are attached to the first tool post 27 to form a comb shape. In addition, a rotary tool, such as an end mill or a drill, can also be attached to the first tool post 27 as the first tools T1. Any of the plurality of types of first tools T1 is selected by movement of the first tool post 27 in the Y1-axis direction. Then, movement of the first tool post 27 in the X1-axis direction brings the selected first tool T1 to cut into and machine the front end portion of the bar W gripped by the spindle 25 and supported by the guide bush 26 or to cut off the machined portion of the bar W. A tool for cutting off a machined portion is a cut-off tool.

The back spindle 28 is movable in an X2-axis direction and a Z2-axis direction. The back spindle 28 is mounted on a not-shown back headstock to be movable together with the back headstock. The X2-axis direction is identical to the X1-axis direction described above, and the Z2-axis direction is identical to the Z1-axis direction described above. In addition, the Z2-axis direction corresponds to the axial direction of the back spindle 28. FIG. 2 illustrates the state in which the back spindle 28 is located at a position facing the spindle 25 across the guide bush 26. At this position, the back spindle axis, which is the center of rotation of the back spindle 28, is collinear with the spindle axis CL. The direction of the back spindle axis coincides with the Z2-axis direction. The machined portion of the bar W having been machined by using the spindle 25 is cut off by the cut-off tool and passed to the back spindle 28. The machined portion having been cut off is referred to below as the cut-off portion. A discharge through-hole 281 passes through the back spindle 28 in the Z2-axis direction extending from the chuck at the front end to the rear end. In manufacturing a long product that requires a grip change during a machining cycle, a machined portion of the bar W is sequentially inserted into the discharge through-hole 281 of the back spindle 28 facing the spindle 25. The back spindle 28 releasably grips the cut-off portion passed from the spindle 25 and the machined portion of the bar W that has been machined by using the spindle 25. In addition, while the spindle 25 performs the grip change of the bar W during the machining cycle with the spindle 25, the back spindle 28 stops at the position facing the spindle 25 while gripping the front end portion of the bar W inserted into the discharge through-hole 281. The grip change by the spindle 25 during the machining cycle includes releasing the bar W, moving backward, and gripping the bar W again. After that, the cut-off portion that has been machined by using the spindle 25 and has been passed to the back spindle 28 is discharged to the rear side of the back spindle 28 through the discharge through-hole 281. The rear side of the back spindle 28 is the right side in FIG. 2.

The second tool post 29 is movable in a Y2-axis direction. The second tool post 29 may be movable in the X2-axis direction. The Y2-axis direction is identical to the Y1-axis direction described above. Second tools T2, such as a drill and an end mill for machining a cut-off portion, are attached to the second tool post 29. The plurality of second tools T2 may be attached to the second tool post 29 alongside in the Y2-axis direction. Any of the plurality of types of second tools T2 is selected by movement of the second tool post 29 in the Y2-axis direction. Then, a part of the cut-off portion closer to the cut-off end gripped by the back spindle 28 is machined by movement of the back spindle 28 in the X2-axis direction and the Z2-direction. The part of the cut-off portion closer to the cut-off end that has been machined becomes a product manufactured by the lathe system 1. Machining with the back spindle 28 may not be performed. In this case, the cut-off portion becomes a product without being machined.

The bar feeder 4 includes a pusher 44, a pusher driving mechanism 45, a pusher motor 46, a front end sensor 47, and a home position sensor 48 in addition to the bar feeder operation panel 42 (see FIG. 1) described above. The pusher 44 is guided movably in the Z1-axis direction by a guide (not illustrated). A finger chuck 441 for gripping the rear end of the bar W is provided at the front end of the pusher 44. The finger chuck 441 is rotatable about the spindle axis CL, which is a rotational axis, by being rotatably attached to another portion of the pusher 44. The finger chuck 441 grips the rear end of the bar W, and accordingly, the pusher 44 is coupled to the bar W. That is, while the finger chuck 441 grips the bar W, the pusher 44 moves in the Z1-axis direction together with the bar.

The pusher driving mechanism 45 includes pulleys (not illustrated) provided on the front end side and the rear end side of the bar feeder 4 and a drive belt stretched over the pulleys. A coupling portion 451 is fixed to the drive belt. The coupling portion 451 couples the drive belt and the rear end portion of the pusher 44 to each other. The pulley provided on the rear end side of the bar feeder 4 is fixed to the output shaft of the pusher motor 46.

When the output shaft of the pusher motor 46 rotates in one direction, the pusher driving mechanism 45 and the coupling portion 451 move the pusher 44 toward the NC lathe 2 in the Z1-axis. Conversely, when the output shaft of the pusher motor 46 rotates in the other direction, the pusher driving mechanism 45 and the coupling portion 451 move the pusher 44 away from the NC lathe 2 in the Z1-axis. The bar W with the axis aligned with the spindle axis CL among the plurality of bars W stored in the bar feeder 4 is gripped by the finger chuck 441. Then, when the pusher 44 moves, the bar W gripped by the finger chuck 441 moves in the axial direction of the bar W. That is, the bar W moves toward the front end thereof when the output shaft of the pusher motor 46 rotates in one direction, and the bar W moves toward the rear end thereof when the output shaft of the pusher motor 46 rotates in the other direction. The pusher motor 46 has a pusher encoder 461. The pusher encoder 461 may be provided separately from the pusher motor 46. The pusher encoder 461 detects the number of revolutions and the amount of rotation of the pusher motor 46. The detection results of the pusher encoder 461 are sent to a second control apparatus 40 (see FIG. 3).

The front end sensor 47 detects the front end of the bar W. In addition, the home position sensor 48 detects whether the pusher 44 is located at the home position. The home position of the pusher 44 is located on the rearmost side in the movement range of the pusher 44. The home position sensor 48 detects the rear end of the pusher 44. The detection results of the front end sensor 47 and the home position sensor 48 are sent to the second control apparatus 40 (see FIG. 3). The second control apparatus 40 grasps the front end position of the bar W when the bar W is first supplied to the NC lathe 2 after power is turned on or when a new bar W is supplied to the NC lathe 2 according to the detection result of the front end sensor 47 and the detection result of the pusher encoder 461. In addition, the second control apparatus 40 grasps the position of the pusher 44 according to the detection result of the home position sensor 48 and the detection result of the pusher encoder 461.

FIG. 3 is a block diagram illustrating a hardware structure of the lathe system illustrated in FIG. 1. FIG. 3 does not illustrate the hardware structure less relevant to the present invention among the hardware structure of the lathe system 1 even if the hardware structure operates the components described above.

As illustrated in FIG. 3, the NC lathe 2 includes a first control apparatus 20, the lathe operation panel 24 described above, a Z1-axis motor 252, a spindle motor 253, and a spindle actuator 254. The first control apparatus 20 is a so-called numerical control (NC) apparatus and includes a CPU 201, a programmable logic controller (PLC) 202, and a storage unit 203. The first control apparatus 20 is a computer having a computing function of the CPU 201. The first control apparatus 20 controls the operations of individual components, such as the spindle 25, the first tool post 27, the back spindle 28, and the second tool post 29 illustrated in FIG. 2, according to the machining program stored in the storage unit 203 and inputs from the lathe operation panel 24. FIG. 3 illustrates some of the motors and actuators that drive the individual components. The first control apparatus 20 performs numerical control of mainly the servo motor provided in the NC lathe 2. In addition, the PLC 202 of the first control apparatus 20 performs sequence control of the operations of devices other than the servo motors for the cylinder, the valve, and the like provided mainly in the NC lathe 2.

The storage unit 203 stores various programs, such as a ladder program and a macro program, in advance. Furthermore, the operator stores various types of information, such as data about tools, data about the diameter of the bar W, and data about the length of a product, in the storage unit 203 in addition to the machining program. The storage unit 203 includes non-volatile memories, such as a ROM, an HDD, and an SSD, and volatile memories, such as a RAM.

The Z1-axis motor 252 is a servo motor that rotates by receiving an instruction from the first control apparatus 20. Rotation of the Z1-axis motor 252 moves the spindle 25 (see FIG. 2) in the Z1-axis direction. An amplifier (not illustrated) may be provided between the first control apparatus 20 and the Z1-axis motor 252, and the first control apparatus 20 controls the Z1-axis motor 252 by sending an instruction to the amplifier. The amplifier will not be described below. The Z1-axis motor 252 has a Z1-axis encoder 2521. Since the output of the Z1-axis encoder 2521 is fed back to the first control apparatus 20, the first control apparatus 20 always grasps the position of the spindle 25 (see FIG. 2) in the Z1-axis direction.

The spindle 25 (see FIG. 2) has the spindle motor 253, such as a built-in motor. The spindle motor 253 rotates by receiving an instruction from the first control apparatus 20. As the spindle motor 253 rotates, the spindle 25 and the bar W (see FIG. 2) gripped by the spindle 25 rotate about the spindle axis CL (see FIG. 2). The back spindle 28 also has a back spindle motor as the spindle 25, but a description thereof will be omitted. The spindle actuator 254 is an actuator, such as a hydraulic cylinder, for operating the collet chuck 251 (see FIG. 2). The spindle actuator 254 moves the chuck sleeve (not illustrated) in the forward direction, and accordingly, the collet chuck 251 closes and the bar W is gripped by the spindle 25. In addition, the movement of the chuck sleeve in the backward direction opens the collet chuck 251 and causes the spindle 25 to release the bar W. The back spindle 28 also has a back spindle actuator that opens and closes the back collet chuck of the back spindle 28 as the spindle 25, but a description thereof will be omitted.

The bar feeder 4 includes the second control apparatus 40 in addition to the bar feeder operation panel 42, the pusher motor 46, the front end sensor 47, and the home position sensor 48 described above. The second control apparatus 40 performs sequence control for the individual components of the bar feeder 4. The second control apparatus 40 controls the operations of actuators (not illustrated) provided in the pusher motor 46 and the bar feeder 4 according to the information received from the sensors, the pusher encoder 461, and the like. In addition, the second control apparatus 40 controls the operation of the bar feeder 4 according to an operation request from the first control apparatus 20. The second control apparatus 40 has a bar feed storage unit 401. The bar feed storage unit 401 stores information about the bar length shortage position of the pusher 44. The initial value of the bar length shortage position is set to a position at which the collet chuck 251 (see FIG. 2) and the pusher 44 do not interfere with each other with the spindle 25 located at the most backward position in the movable range, and the set value is stored in the bar feed storage unit 401. However, the bar length shortage position can be rewritten by an input operation through the bar feeder operation panel 42.

The pusher motor 46 is a servo motor that rotates by receiving an instruction from the second control apparatus 40. Rotation of the pusher motor 46 moves the pusher 44 (see FIG. 2) in the Z1-axis direction. As described above, the second control apparatus 40 always grasps the position of the pusher 44 in the Z1-axis direction by grasping the moving distance from the home position of the pusher 44 according to the detection result of the home position sensor 48 and the detection result of the pusher encoder 461 and sends the position to the first control apparatus 20 as information about the bar feeder 4. In addition, the second control apparatus 40 sends, to the first control apparatus 20, the position in Z1-axis direction of the front end of the bar W to be newly supplied or the front end of the bar W first fed to the NC lathe 2 after power-on. After the NC lathe 2 starts machining, the pusher motor 46 is controlled by the second control apparatus 40 to rotate in one direction basically at a constant torque until the start of pulling out of the remaining bar. This causes the pusher 44 to bias the bar W toward the front end of the bar W with a set load. This load is set to a relatively small load that does not cause a slip between the bar W and the spindle 25 when the spindle 25 grips the bar W.

The bar feeder operation panel 42 is a touch panel in which an operation unit is integrated with the display screen. The bar feeder 4 may be provided with an emergency stop button, a torque setting switch for the pusher motor 46, and the like in addition to the bar feeder operation panel 42. The operator of the lathe system 1 can manually move the pusher 44 (see FIG. 2) in the Z1-axis direction or input various setting values of the bar feeder 4, such as the bar length shortage position, by using the bar feeder operation panel 42. In addition, the bar feeder operation panel 42 indicates various types of information about the bar feeder 4, such as various setting values and error details of the bar feeder 4, and operation buttons for the bar feeder 4.

The first control apparatus 20 and the second control apparatus 40 are connected to each other by a signal cable. The first control apparatus 20 sends an operation request or the like to the second control apparatus 40 via the signal cable. In addition, the second control apparatus 40 sends, to the first control apparatus 20, various types of information about the bar feeder 4 including the position information of the pusher 44 at any time via the signal cable. In addition, the second control apparatus 40 sends requested information, such as information about the bar length shortage position, to the first control apparatus 20 according to an information sending request from the first control apparatus 20.

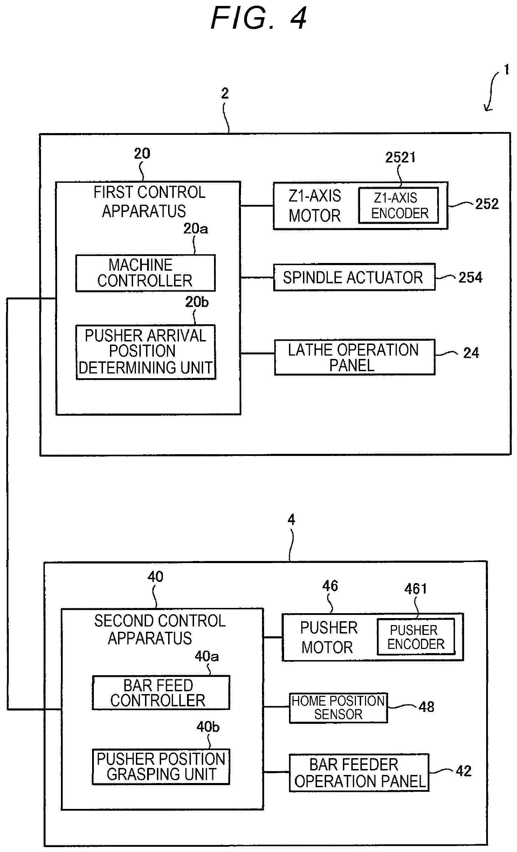

FIG. 4 is a functional block diagram illustrating a functional structure of the lathe system illustrated in FIG. 1. FIG. 4 also illustrates only the functional structure that is relevant particularly to the present invention, and the other functional structure of the lathe system 1 is not illustrated or described.

As illustrated in FIG. 4, a machine controller 20a and a bar length shortage prior determination unit 20b are implemented by the first control apparatus 20. The machine controller 20a has a functional structure mainly achieved by the CPU 201, the PLC 202, and the storage unit 203 illustrated in FIG. 3. In addition, the bar length shortage prior determination unit 20b has a functional structure mainly achieved by the CPU 201 and the storage unit 203. In addition, a bar feed controller 40a and a pusher position grasping unit 40b are implemented by the second control apparatus 40.

The machine controller 20a controls the operations of the individual components of the NC lathe 2. In addition, the machine controller 20a may send an operation request or an information sending request to the second control apparatus 40. The bar length shortage prior determination unit 20b determines prior to the start of a single machining cycle for a long product whether the pusher 44 is in a position permitting a grip change to be performed during the single machining cycle. Specifically, the bar length shortage prior determination unit 20b calculates the position of the pusher 44 before any grip change to be performed during the single machining cycle to determine, prior to the start of the single machining cycle, whether the pusher 44 reaches the bar length shortage position. When a plurality of grip changes are to be performed during the single machining cycle, the bar length shortage prior determination unit 20b may calculate the position of the pusher 44 before the last one among the plurality of grip changes. The bar length shortage prior determination unit 20b may calculate all the positions of the pusher 44 before all the grip changes to be performed during the machining cycle. The bar length shortage prior determination unit 20b may request the second control apparatus 40 to send information about the bar length shortage position.

The bar feed controller 40a has a functional structure that controls the operations of the pusher motor 46 and the like according to outputs from various sensors provided in the bar feeder 4, an input from the bar feeder operation panel 42, and an operation request from the first control apparatus 20. The pusher position grasping unit 40b grasps the pusher position, which is the advance distance of the pusher 44 (see FIG. 2) from the home position sensor 48, by calculating the position in the Z1-axis direction of the pusher 44 from the home position sensor 48 according to the detection result of the home position sensor 48 and the detection result of the pusher encoder 461. The bar feed storage unit 401 stores length information of the pusher 44. The pusher position grasping unit 40b also grasps the distance from the home position sensor 48 to the front end position of the pusher 44 by adding the length of the pusher 44 to the advance distance of the pusher 44.

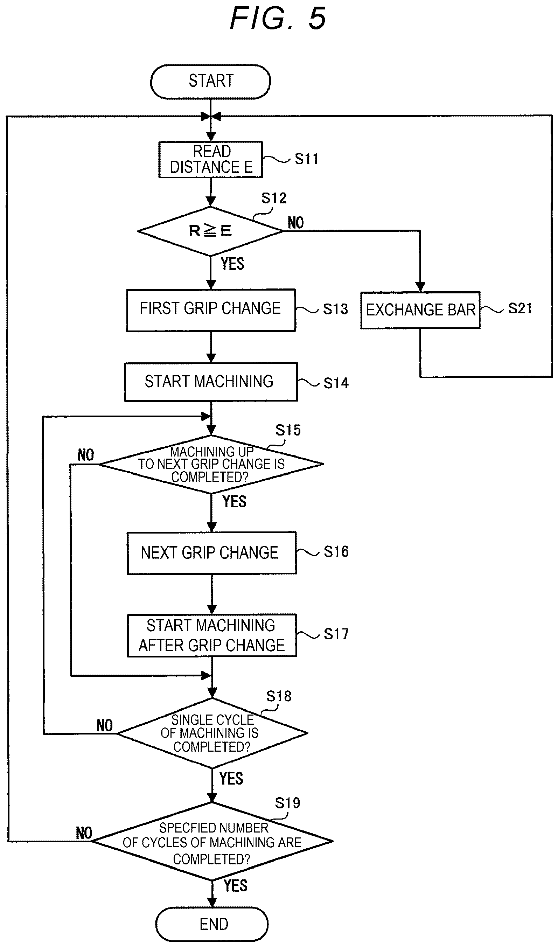

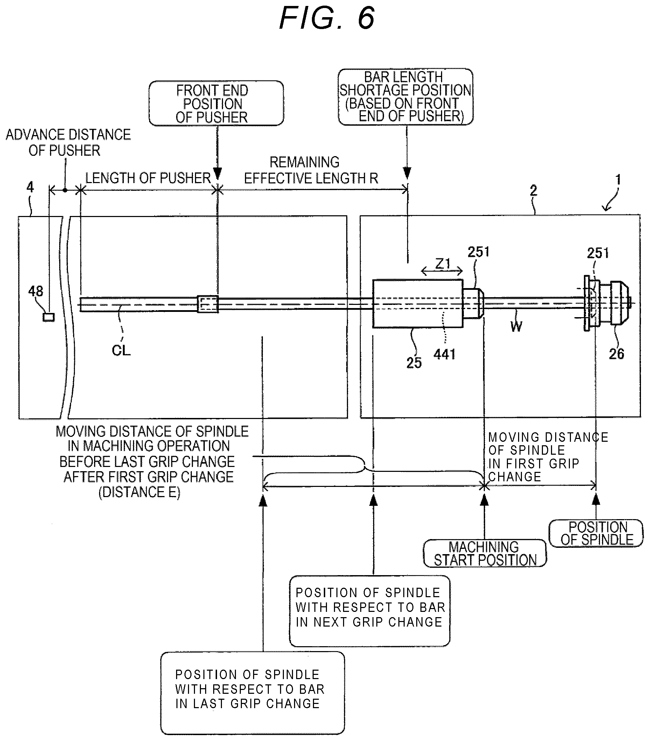

FIG. 5 is a flowchart illustrating the operation of the lathe system illustrated in FIG. 1. In addition, FIG. 6 is a plan view for describing the positional relationship in the operation illustrated in FIG. 5.

The flowchart in FIG. 5 illustrates the operation of the lathe system 1 after an initial operation after power-on is completed or after setup work for machining a new product is completed. In the initial operation or the setup operation, the front end of the bar W is cut off by a cut-off tool. In the state in which the initial operation or the setup operation is completed, the cut-off tool functions as a stopper and the front end of the bar W is in contact with the cut-off tool. In this state, the bar W is pushed against the cut-off tool by being biased toward the front end by the pusher 44. In addition, the flowchart in FIG. 5 illustrates the manufacturing of a long product longer than the movable range of the spindle 25.

As illustrated in FIGs. 5 and 6, the bar length shortage prior determination unit 20b reads a distance E before starting the single machining cycle in accordance with the machining program for a long product (step S11). The distance E may be the moving distance of the spindle 25 in a series of operations after the first grip change and before the last grip change in the single machining cycle. This distance E may also be the moving distance of the bar W in a series of operations after the first grip change and before the last grip change in the single machining cycle. When the distance E is specified in the machining program, this specified distance is used as the distance E. The distance E specified in the machining program is referred to below as the specified distance. The specified distance is specified by using a G-code instruction or an M-code instruction. The specification of a G-code instruction in the machining program is, for example, "G*** A_ W_ S_ X_ Z_ F_ B_ Q_ K_ E_". In practice, a number indicating the content or the function of a code is specified in "***" that follows G. In addition, an argument is specified in "_" that follows each of the alphabets other than G. In this example, the specified distance is specified as an argument that follows E. When an M code instruction is used, the specified distance is also specified as an argument similarly. When the specified distance is given in the machining program as described above, the specified distance is stored in the storage unit 203. The bar length shortage prior determination unit 20b reads the specified distance stored in the storage unit 203 as the distance E in step S11. When the distance is not specified in the machining program, the bar length shortage prior determination unit 20b may analyze the machining program to calculate the moving distance of the spindle 25 in the series of operations after the first grip change and before the last grip change in the single machining cycle. The bar length shortage prior determination unit 20b may store the calculated distance in the storage unit 203 as the distance E. The distance E obtained by the calculation is referred to below as a calculated distance. The bar length shortage prior determination unit 20b reads the calculated distance stored in the storage unit 203. The series of operations described above includes all operations in the machining program other than any grip change to be performed during the single machining cycle, regardless of whether the first tool T1 is in contact with the bar W. In addition, the moving distance of the spindle 25 may be obtained by subtracting the total distance that the spindle 25 moves back for the operations to be performed during the single machining cycle from the total distance that the spindle moves forward for the operations to be performed during the single machining cycle. FIG. 6 illustrates an example in which a grip change is performed twice during the single machining cycle. The bar length shortage prior determination unit 20b may obtain the distance E by calculating the total distance that the spindle 25 moves back in the grip changes to be performed during the single machining cycle. In this case, the distance E obtained by the calculation corresponds to the calculated distance. The grip changes to be performed during the single machining cycle in the embodiment excludes the first grip change performed before the machining starts.

Next, the bar length shortage prior determination unit 20b compares the distance E with a remaining effective length R, which is the distance from the current pusher position to the bar length shortage position (step S12). Step S11 and step S12 described above correspond to an example of a bar length shortage prior determining step. As described above, the bar length shortage position is a position at which the pusher and the spindle do not interfere with each other when the spindle moves back in a grip change. The bar length shortage position is stored in the bar feed storage unit 401 of the second control apparatus 40. Then, when, for example, the lathe system 1 starts up or the bar length shortage position is rewritten, the bar length shortage position is sent from the second control apparatus 40 to the first control apparatus 20 and stored in the storage unit 203. The bar length shortage prior determination unit 20b calculates the remaining effective length R according to the stored bar length shortage position and the position information of the pusher 44 sent from the second control apparatus 40 at any time. Then, when the remaining effective length R is equal to or more than the distance E (YES in step S12), the machine controller 20a performs the first grip change (step S13). When the first grip change is completed, the machine controller 20a starts machining according to the machining program (step S14). The machining that starts in step S14 corresponds to an example of a machining step.

After the machining starts, when the machining before the next grip change is not completed (NO in step S15), the processing proceeds to step S18. When the machining before the next grip change is completed (YES in step S15), the machine controller 20a interrupts the machining and performs a grip change (step S16). Normally, according to the machining program, the spindle 25 moves forward as the machining progresses, and the next grip change is performed when the spindle 25 reaches or approaches the most advanced end in the movable range of the spindle 25. When the grip change is completed, the machine controller 20a starts machining (step S17). The machine controller 20a determines at any time whether the single machining cycle is completed (step S18). After the machining in step S14 starts, a grip change and machining are repeated until the single machining cycle is completed by repeating steps S15 to S18. When the single machining cycle is completed (YES in step S18), the machine controller 20a determines whether a number of machining cycles specified in the machining program are completed (step S19). When the specified number of machining cycles are completed (YES in step S19), the machine controller 20a ends the operation. When the specified number of machining cycles are not completed (NO in step S19), the processing returns to step S11. The bar length shortage prior determination unit 20b performs the determination (step S11 and step S12), and the machine controller 20a starts the operation in the next machining cycle when the remaining effective length R is equal to or more than the distance E (YES in step S12).

On the other hand, when the remaining effective length R is less than the distance E (NO in step S12), the machine controller 20a instructs the spindle 25 to release the bar W without starting machining and instructs the bar feeder 4 to perform a bar exchange that pulls out the remaining bar from the NC lathe 2 and supplies a new bar W to the NC lathe 2 (step S21). After that, the processing returns to step S11. The bar length shortage prior determination unit 20b performs determination (step S11 and step S12), and the machine controller 20a starts the operation in the next machining cycle. Since the remaining effective length R is clearly equal to or more than the distance E immediately after the bar exchange in step S21, the processing may proceed to step S13 after step S21 and start the operation in the next machining cycle.

In the lathe system 1 and the method of controlling the lathe system 1 described above, the bar length shortage prior determination unit 20b can determine, prior to the start of the single machining cycle, that a grip change during the machining process is not permitted. Such prior determination prevents the production of unfinished products and reduces any fruitless machining cycles. Such prior determination also prevents wasting time, material, and labor. Such prior determination also saves the first tool T1 and components of the NC lathe 2 from degrading and wearing due to waste machining. Such prior determination also eliminates the need of separately preparing a bar length shortage program to cut off the machined portion of the bar W and discard the cut-off portion. In other words, since the operator only needs to input the specified distance (distance E) without creating the bar length shortage program, the operability of the lathe system 1 dramatically improves.

In addition, when the distance E is not specified, the bar length shortage prior determination unit 20b automatically calculates the distance E according to the machining program, thereby reducing the effort of the operator to calculate and input the distance E. Furthermore, since the bar length shortage prior determination unit 20b calculates the distance E by analyzing the machining program, human error in calculation can be prevented, thereby enabling an accurate determination.

The present invention is not limited to the embodiment described above, and various modifications can be made within the scope of the appended claims. For example, the embodiment adopts an example in which the bar length shortage prior determination unit 20b is provided in the Swiss-type NC lathe 2 with the movable spindle 25, but the bar length shortage prior determination unit 20b may be provided in a spindle-fixed NC lathe having the spindle 25 fixed to the base. In this case, the advance distance of the pusher 44 during machining may be used instead of the distance E for determination. In addition, the operation of the embodiment illustrated in FIG. 5 and the operation of the related art illustrated in FIG. 7 may be switched in the machining program or through an input operation on the lathe operation panel. In other words, the operator may select whether the bar length shortage prior determination unit 20b is operated or whether the bar length shortage determining step is performed. When the machining program is used to perform the switching described above, codes specified in the machining program, such as a G-code instruction or an M-code instruction, can be used for the switching.

A component included in only one of the modifications described above may be applied to another modification.

## Claims

1. A machine tool system capable of manufacturing a long product from a bar by performing a grip change by a spindle during a machining cycle, the long product being of a length exceeding a movable range of the spindle, the spindle releasably gripping the bar and moving in an axial direction of the bar, the machine tool system comprising:
a pusher capable of moving in the axial direction together with the bar; and
a bar length shortage prior determination unit that determines whether the pusher is in a position permitting the grip change to be performed during the machining cycle, the determination being made prior to the start of the machining cycle.

2. The machine tool system of claim 1, wherein the determination is made according to a specified distance specified in a machining program.

3. The machine tool system of claim 1, wherein the determination is made according to a calculated distance obtained by calculating a moving distance of the spindle according to a machining program.

4. A method of controlling a machine tool system, the machine tool system being capable of manufacturing a long product from a bar by performing a grip change by a spindle during a machining cycle, the long product being of a length exceeding a movable range of the spindle, the spindle releasably gripping the bar and moving in an axial direction of the bar, the method comprising:
determining whether a pusher is in a position permitting the grip change to be performed during the machining cycle, the pusher being movable in the axial direction together with the bar, and the determination being made prior to the start of the machining cycle; and
start machining when it is determined that the pusher is in a position permitting the grip change to be performed during the machining cycle.
